# EUROPEAN PATENT SPECIFICATION

(11) **EP 0 610 712 B1**
(45) Date of publication and mention of the grant of the patent: **03.09.1997**
(21) Application number: 94101013.4
(22) Date of filing: 25.01.1994
(51) Int. Cl.: B29D 30/56, B29C 43/36

(54) **A method of attaching precured treads to tire casings utilizing a wickless cure apparatus**
Verfahren zur Befestigung von vorvulkanisierten Laufflächen an Reifenkarkassen mittels einer Aushärtungsvorrichtung ohne Entlüftungsgewebe
Procédé d'application de bandes de roulement prévulcanisées à des carcasses de pneumatique utilisant un appareil de vulcanisation sans tissu perméable

(30) Priority: 09.02.1993 US 15004
(43) Date of publication of application: 17.08.1994
(73) Proprietor: THE GOODYEAR TIRE & RUBBER COMPANY, Akron, Ohio 44316-0001 (US)
(72) Inventor: Wilson, Paul Victor, Dorset Ontario, P0A 1EO (CA)
(74) Representative: Leitz, Paul

(56) References cited:
- EP-A- 0 577 231
- WO-A-92/08603
- DE-A- 3 420 125
- US-A- 4 309 234
- US-A- 4 328 053

## Description

### Background of the Invention

This invention relates generally to a method for attaching a grooved precured tread to a tire casing.

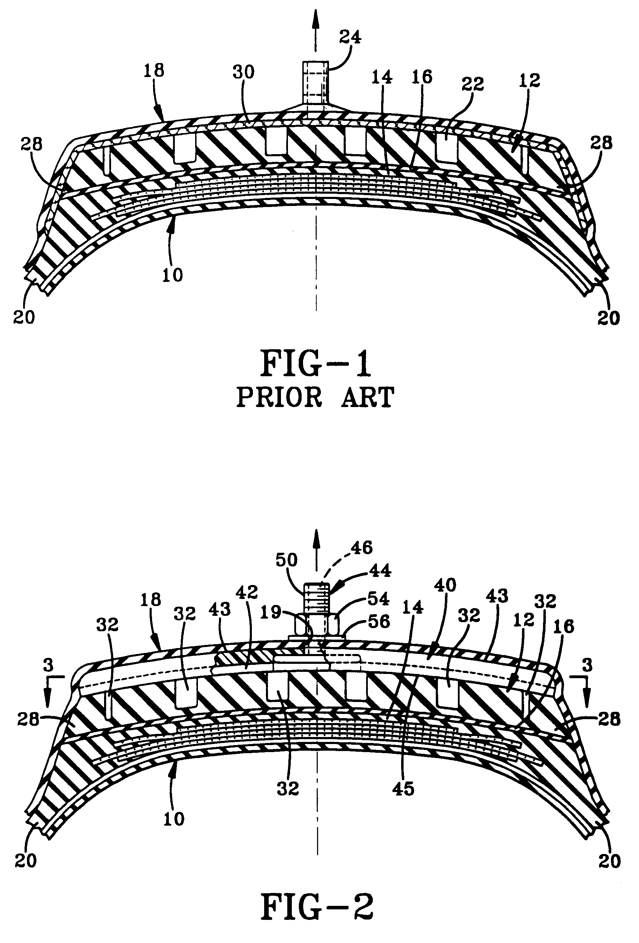

Traditionally, and as illustrated in Figure 1, a precured rubber tread 12 is applied over the crown region 14 of the tire casing 10 in which a layer of vulcanizable rubber based material 16 or cushion gum is interposed between the tread 12 and the tire casing 10. A flexible airtight member or envelope 18 is then placed over the tread 12 to cover at least a portion of the sidewalls 20 of the tire casing 10. This envelope 18, by evacuation, allows air to be removed from the region between the tread and casing and helps to provide pressure to the tread 12 to enhance the bonding of the tread 12 to the tire casing 10. It has been found that this method does not insure that air entrapped between the envelope and the tread carcass assembly is adequately removed. To facilitate removal of this entrapped air, many have employed a wick pad 30 or a perforated layer between the tread 12 and the flexible membrane 18. These air permeable layers 30 allow the air to escape through the air permeable layer 30 to an envelope valve stem 24 which is provided on the outer periphery of the envelope. This valve stem is then attached to a hose which will permit the evacuation of this entrapped air. Such a system is described in Witherspoon, U.S. Patent No. 4,309,234.

These wick pads 30 are commonly wrapped around the circumference of the tread 12 and stapled to it. It has been determined that such stapling can lead to premature failures of the flexible envelope 18. When the flexible envelope fails during the curing procedure a resultant infiltration of air, steam or other contaminants between the tread and the tire casing will likely occur resulting in the loss of the tire. Additionally, the wick systems 30 currently employed have a limited useful life. As a result, the use of such wicks 30 increase the cost of the finished product.

A variety of methods to cure a precured tread to a tire casing have been developed over the years. Several such systems are disclosed in Schelkmann et al. U.S. Patent Nos. 3,325,326 and 4,151,027 and Brewer U.S. Patent No. 4,434,018 and Lindsey et al. U.S. Patent No. 5,055,148. In these described methods for curing a tread to a tire, it is often found desirable to provide the wick pad as described above for facilitating the removal of entrapped air between the tread carcass assembly and the flexible envelope. The present invention permits the removal of entrapped air without requiring a wick or wick pad to be employed between the tread and the flexible envelope. The new method effectively removes air while minimizing damage to the flexible envelope.

### Summary of the Invention

An improved method for attaching a precured grooved tread 12 to the casing of a pneumatic tire 10 is described.

The method comprises the steps of:
a) applying a layer of curable material circumferentially about the exterior of the tire casing in its crown region;
b) applying a precured, grooved tread circumferentially about the exterior of the tire in its crown region, the curable material being between the tread and the casing;
c) placing a flexible envelope over the tread and a portion of each sidewall of the tire casing to form an assembly, the envelope being circumferentially sealed with the tire on both sides of the tire;
d) placing the assembly in a curing chamber;
e) pressurizing and heating the chamber; and
f) evacuating the region between the envelope and the tread.

The improved method being characterized by carrying out the evacuation of step f) above by withdrawing air from between the envelope and the tread through a passage in a rigid body, the rigid body being positioned between the envelope and the tread and the passage in the body communicating with at least one of the grooves in the tread.

In a preferred embodiment, the rigid body extends from tread edge to tread edge communicating with a plurality of grooves. The rigid body has a width occupying less than one percent or less than 10 cm of the circumferential length of the tread. This narrow width rigid body enables the flexible envelope to extend into the location of the circumferential grooves to apply chamber pressure to the groove walls.

### Brief Description of the Drawings

The following is a brief description of the drawings in which like parts may bear like reference numerals and in which:
Figure 1 is a partial cross sectional view of a tread/casing/envelope assembly according to the prior art;
Figure 2 is a partial cross sectional view of a tread/casing/envelope with rigid body assembly according to the present invention;
Figure 3 is a partial plan view taken along lines 3-3 of Figure 2;
Figure 4 is a side view of the rigid body;
Figure 5 is a cross-sectional view of the rigid body taken along lines 5-5 of Figure 4; and
Figure 6 is a cross-sectional view of the assembly taken along lines 6-6 of Figure 3.

### Definitions

The following definitions are applicable to this specification, including the claims, wherein:
"Axial" and "axially" are used herein to refer to directions and/or displacements that are parallel to the axis of rotation of the tire;
"Radial" and "radially" means directions and/or displacements from the axis of rotation of the tire;
"Inner" means directions and/or displacements toward the inside of the tire while "outer" means directions and/or displacements toward the exterior of the tire.

### Detailed Description

Referring to Figure 1, there is illustrated according to the prior art, a partial cross-sectional view of a tire casing 10 having a precured rubber tread 12 located radially outwardly from the crown portion 14 of the tire casing 10. Interposed between the casing 10 and tire tread 12 is a layer 16 of vulcanizable material, also known as a cushion gum, for adhering the tread 12 to the tire casing 10. A flexible airtight member 18, also known as an envelope 18, is placed radially outwardly over the tread 12 and extends to enclose at least a portion of the sidewalls 20 of the tire casing, thereby enclosing an area 22 under the envelope 18. The envelope is further supplied with an input means 24 connecting the envelope with a source of fluid pressure.

The envelope 18 can be attached by a number of current methods known in the art, such as for example by locking it to the bead regions or the sidewall regions of the tire casing. In the preferred embodiment, the envelope is held in place by a ring sealing system such as the Sure Lock™ system of The Goodyear Tire & Rubber Company.

The precure tread may be a standard precure tread or one with one or more splice portions or it could be a one-piece spliceless precured tread such as the Unicircle™ tread as manufactured by The Goodyear Tire & Rubber Company.

Disposed between the flexible envelope 18 and the casing 10 and tread 12 is an air permeable layer 30. The air permeable layer 30 is wrapped about the tread 12 and is affixed thereto by stapling. This air permeable layer 30 is commonly known as a wick or wick pad. The wick pad 30 permits the removal of the trapped air to be transmitted along the wick 30 to a vent 24 in the envelope 18. The metal staples attaching the wick pad 30 to the tread 12 have been known to damage the flexible envelope 18. When the envelope 18 is damaged, air or steam can infiltrate through the envelope 18 thereby damaging the tire causing a product reject.

In order to facilitate the removal of the entrapped air between the envelope 18 and the tread 12 it is common to pull a vacuum on the assembly. This vacuum can be pulled through the valve stem hose connection 24.

The above assembly as described will be placed in a tire chamber whereby heat energy is transmitted to the tire and tread assembly causing a temperature increase therein. As the temperature increases the vulcanizable material commonly known as the cushion gum layer 16 becomes fluidic and will begin to soften and then flow. As the temperature continues to rise this cushion gum layer 16 begins to cure and the flow thereof stops. This curing like the original softening and flowing of the cushion gum 16 begins first at the tread edges 28 and then progresses inwardly thereof. Once the tire is cured the heat and pressure in the chamber is relieved and the envelope assemblies are removed from the vulcanizing chamber.

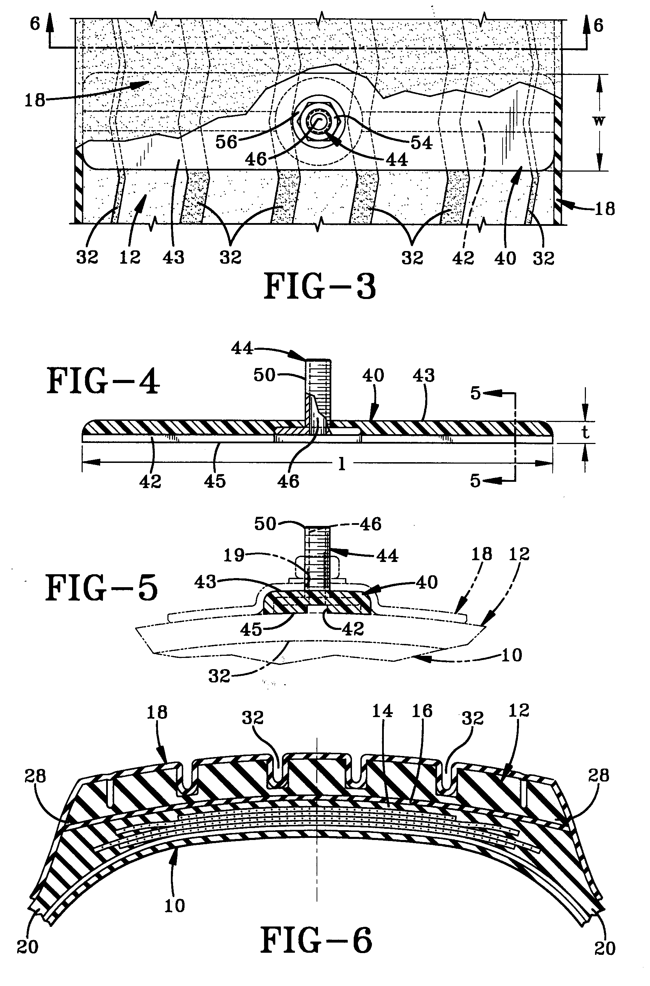

Now referring to Figure 2, there is illustrated a partial cross-sectional view according to the present invention. The cross-sectional view is similar to that illustrated in Figure 1 with the exception that the wick or air permeable layer 30 has been replaced with an air venting rigid body 40. The air venting rigid body 40 has an air channel 42 incorporated into the base 45 of the body 40. The air channel 42 extends across the length of the body and when positioned over the tread 12 intersects circumferentially extending grooves 32 of the tread 12. The rigid body 40 as illustrated in Figures 2, 3 and 5 further includes a fitting 44 extending through the body 40 and extending through an opening 19 within the envelope 18. This fitting 44 is in direct communication with the air fluid channel 42 located in the lower surface 45 of the body 40. It is through the channel 42 and the air fitting 44 that entrapped air can be removed from the envelope assembly.

The employment of the rigid body 40 permits air evacuation to occur without requiring the use of any staples or other such mechanical means of attachment to the tire or tread. It is preferable that the air venting rigid body 40 be attached to the envelope 18 at the opening 19 of the envelope by means of a washer 56 and threaded fastener 54 being attached to the fitting 44. The fitting 44 is provided with a threaded end 50 such that a hose could be attached thereto. The hose can then extend to a fitting in the chamber and then be vented to the outside atmosphere and/or attached to a means for evacuating fluid pressure. It is also possible to provide a supply of fluid pressure through the fitting 44. Such a pressure supply is described in the Lindsay et al. patent, U.S. Patent No. 5,055,148. It has been found to improve uniformity of the tire tread assembly by supplying fluid pressure to the envelope assembly after the cushion gum liner has begun to cure at the tread edges. This enables a reduction in uniformity problems to be achieved which results in the cushion gum liner to be more evenly distributed under the tread.

In the preferred embodiment of Fig. 4, the rigid body 40 is comprised of a thermoplastic material. The rigid body 40 was manufactured using plastic material capable of withstanding the temperatures and pressures within the autoclave chamber, any suitable material such as teflon, rubber nylon or polyurethane may be employed. The term rigid as used herein means that the body has sufficient structural stiffness to prevent the body from collapsing into the grooves during the autoclave cycle, thereby maintaining the grooves open under the body. Although not illustrated, it is preferred that all edges of the rigid body 40 be chamfered or radiused to avoid any potential damage to the envelope 18. The fitting 44 was manufactured as a separate component and attached to the body 40. The fitting 44 was constructed of brass.

As an alternative embodiment not illustrated, it is believed possible to incorporate the fitting 44 into the envelope 18 and provide the rigid body 40 with air channels on the upper surface 43. This alternative body 40 would have upper channels that communicate with the lower channel 42 or channels while intersecting the envelope opening 19, thereby providing an airway path. In such a design, the rigid body 40 must be properly aligned with the envelope opening 19 and, therefore, should be attached to the tire assembly to insure the open air pathway is maintained.

It is believed that the following methods of attaching a precure tread 12 to a tire casing 10 may be employed using the air venting rigid body system as described above.

A first method comprises the steps of: a) placing an assembly into a pressure chamber, the assembly comprising a tire casing 10 having a grooved precured tread 12 disposed over a crown region 14 and vulcanizable material 16 disposed between the tread 12 and the tire casing 10, and an envelope means 18 disposed over the tread 12 and at least a portion of both sidewalls 20 of the tire casing 10, the envelope means 18 having an air venting rigid body 40 having an air channel 42 communicating with at least one of the tread grooves 32 and a fitting 44 extending through the envelope 18; b) attaching the fitting to an air vent line; and c) supplying both fluid pressure and heat to the chamber, thereby curing the vulcanizable material 16.

An alternative second method may be described as comprising the steps of: a) applying a grooved precured rubber tread 12 to a crown region 14 of a tire casing 10 having a layer of vulcanizable material 16 interposed between the tread 12 and the crown region 14 of the tire casing 10; b) placing an air venting rigid body 40 onto the tread 12, the rigid body 40 having an air channel communicating 42 with at least one of the tread grooves 32 and a fitting 44 with an airway passage 46 communicating with the air channel 42; c) covering the air venting rigid body 40, the tread 12, and at least a portion of both sidewalls 20 of the tire casing 10 with a flexible envelope 18 to form an assembly, the fitting 44 of the rigid body being inserted through an opening 19 of the flexible envelope; d) sealing the envelope opening 19; and e) placing the assembly within a pressure chamber, attaching the fitting 44 to an air vent hose, and supplying both fluid pressure and heat to the pressure chamber.

In the first and second alternative methods, the rigid body 40 may be air tightly attached to the envelope 18 by means of attaching a washer 56 and a threaded fastener 54 to the rigid body fitting 44, thereby compressing the envelope 18 at the opening 19, and thereby forming an air tight seal.

A third alternative method may have the steps of:
a) applying a grooved precured rubber tread 12 to a crown region 14 of a tire casing 10 having a layer of vulcanizable material 16 interposed between the tread 12 and the crown region 14 of the tire casing 10; b) placing an air venting rigid body 40 onto the tread 12, the manifold 40 having an air channel 42 adjacent to and communicating with at least one of the grooves of the tread 12 and upper surfaces having a plurality of air passageways, at least one passageway communicating with the air channel; c) placing a flexible envelope over the rigid body, the tread, and at least a portion of both sidewalls of the tire casing thereby forming an assembly, the envelope having an integral air vent stem; d) aligning the air vent stem with the upper surface of the rigid body thereby forming an air pathway through the body and the valve stem; and e) placing the assembly within a pressure chamber, attaching the envelope valve stem to an air vent hose and supplying both fluid pressure and heat to the pressure chamber.

In any of the approved described methods it is believed important that the rigid body 40 be sufficiently narrow in width to facilitate the envelope's ability to transfer chamber pressure to the groove walls circumferentially about the tread in all locations except at the rigid body. The flexible envelope, as illustrated in Fig. 6, collapses into the grooves when exposed to chamber pressure. The chamber pressure is, therefore, transferred to the groove walls. In wide circumferential grooves the envelope may actually contact the base of the groove. This collapsing of the envelope into the grooves tends to laterally fix the tread to the casing and improves the overall uniformity of the tire. The prior art wick pads being made of cord like material created inconsistency in the amount of flexibility of the envelope, thereby resulting in the envelope applying chamber pressure somewhat non-uniformly across the tread at the groove walls. The present invention only restrains the envelope adjacent the tread at the very narrow location of the rigid body 40. Preferably the width of the rigid body is less than 1% of the circumferential length of the tread or less than 10 cm.

## Claims

1. A method for attaching a precured, grooved tread (12) to the casing (10) of a pneumatic tire, the method including the steps of:
a) applying a layer of curable material (16) circumferentially about the exterior of the tire in its crown region;
b) applying the precured, grooved tread (12) circumferentially about the exterior of the tire (10) in its crown region, the curable material (16) being between the tread (12) and casing (10);
c) placing an envelope (18) over the tread (12) and a portion of each sidewall (20) of the tire casing (10) to form an assembly, the envelope (18) being circumferentially sealed with the tire on both sides of the tire;
d) placing the assembly in a curing chamber;
e) pressurizing and heating the chamber; and f) evacuating the region between the envelope (18) and tread (12);
the method being characterized by carryout of the evacuation of step f) above by withdrawing air from between the envelope (18) and tread (12) through a passage (42) in a rigid body (40), the rigid body (40) being narrow in width placed between the envelope (18) and tread (12) and the passage (42) in the body (40) communicating with at least one of the grooves (32) in the tread (12).

2. The method of claim 1 wherein the rigid body (40) extends from tread edge (28) to tread edge (28) communicating with a plurality of circumferentially extending grooves (32).

3. The method of claim 1 wherein the rigid body (40) has a width occupying less than one percent of the circumferential length of the tread (12).

4. The method of claim 1 wherein the rigid body (40) has a width of less than 10 cm.

5. The method of claim 1 wherein during evacuation the envelope (18) is free to extend into the location of the circumferential grooves (32) to apply chamber pressure to the walls of the grooves (32) except at the location of the rigid body (40).

## Patentansprüche

1. Verfahren zum Befestigen eines vorgehärteten, mit Rillen versehenen Profiles (12) an dem Gehäuse (10) eines Luftreifens, wobei das Verfahren die Schritte umfaßt:
a) Anordnen einer Lage eines härtbaren Materiales (16) umfänglich um das Äußere des Reifens an dessen Kronenbereich;
b) Anordnen des vorgehärteten, mit Rillen versehenen Profiles (12), umfänglich um das Äußere des Reifens (10) in dessen Kronenbereich, wobei das härtbare Material (16) zwischen dem Profil (12) und dem Gehäuse (10) angeordnet ist;
c) Anordnen einer Umhüllung (18) über dem Profil (12) und einem Abschnitt von jeder Seitenwand (20) des Reifengehäuses (10), zum Bilden einer Anordnung, wobei die Umhüllung (18) umfänglich gedichtet ist mit dem Reifen an beiden Seiten des Reifens;
d) Anordnen der Anordnung in einer Aushärtkammer;
e) Druckbeaufschlagen und Erwärmen der Kammer; und
f) Evakuieren des Bereiches zwischen der Umhüllung (18) und dem Profil (12);
wobei das Verfahren dadurch gekennzeichnet ist, daß das Evakuieren von obigem Schritt f) erfolgt durch Entfernen von Luft zwischen der Umhüllung (18) und dem Profil (12) über einen Durchgang (42) in einem steifen Körper (40), wobei der steife Körper (40) eine schmale Breite aufweist, angeordnet zwischen der Umhüllung (18) und dem Proil (12), wobei der Durchgang (42) in dem Körper (40) in Verbindung steht mit zumindest einer der Rillen (32) in dem Profil (12).

2. Verfahren nach Anspruch 1, bei welchem der steife Körper (40) sich von Profilkante (28) zu Profilkante (28) erstreckt, in Verbindung stehend mit einer Mehrzahl von sich umfänglich erstreckenden Rillen (32).

3. Verfahren nach Anspruch 1, bei welchem der steife Körper (40) eine Breite aufweist, welche weniger als 1% der umfänglichen Länge des Profiles (12) einnimmt.

4. Verfahren nach Anspruch 1, bei welchem der steife Körper (40) eine Breite von weniger als 10 cm aufweist.

5. Verfahren nach Anspruch 1, bei welchem während der Evakuierung die Umhüllung (18) sich frei in den Ort der umfänglichen Rillen (32) erstrecken kann, zum Bewirken des Kammerdruckes auf die Wände der Rillen (32), mit Ausnahme des Ortes des steifen Körpers (40).

## Revendications

1. Procédé pour fixer une bande de roulement rainurée prévulcanisée (12) à la carcasse (10) d'un bandage pneumatique, le procédé englobant les étapes consistant à:
a) appliquer une couche d'une matière vulcanisable (16) en position circonférentielle à l'extérieur du pneumatique dans sa région de couronne;
b) appliquer la bande de roulement rainurée prévulcanisée (12) en position circonférentielle à l'extérieur du pneumatique (10) dans sa région de couronne, la matière vulcanisable (16) étant disposée entre la bande de roulement (12) et la carcasse (10);
c) placer une enveloppe (18) par-dessus la bande de roulement (12) et par-dessus une portion de chaque flanc (20) de la carcasse (10) du pneumatique pour former un assemblage, l'enveloppe (18) étant scellée en position circonférentielle avec le pneumatique de part et d'autre du pneumatique;
d) placer l'assemblage dans une chambre de vulcanisation;
e) pressuriser et chauffer la chambre; et
f) faire le vide dans la région s'étendant entre l'enveloppe (18) et la bande de roulement (12);
le procédé étant caractérisé par le fait que l'on fait le vide à l'étape f) ci-dessus en chassant l'air régnant entre l'enveloppe (18) et la bande de roulement (12) via un passage (42) pratiqué dans un corps rigide (40), le corps rigide (40) étant placé, avec une largeur étroite, entre l'enveloppe (18) et la bande de roulement (12), et le passage (42) pratiqué dans le corps (40) communiquant avec au moins une des rainures (32) pratiquées dans la bande de roulement (12).

2. Procédé selon la revendication 1, dans lequel le corps rigide (40) s'étend du bord de bande de roulement (28) au bord de bande de roulement (28) en communiquant avec plusieurs rainures (32) en position circonférentielle.

3. Procédé selon la revendication 1, dans lequel le corps rigide (40) possède une largeur qui s'étend sur moins de 1 pour cent de la longueur circonférentielle de la bande de roulement (12).

4. Procédé selon la revendication 1, dans lequel le corps rigide (40) possède une largeur inférieure à 10 cm.

5. Procédé selon la revendication 1, dans lequel, lorsqu'on fait le vide, l'enveloppe (18) est libre de s'étendre dans les endroits occupés par les rainures circonférentielles (32) pour exercer la pression régnant dans la chambre sur les parois des rainures (32), à l'exception de l'endroit où se trouve le corps rigide (40).
